# EUROPÄISCHE PATENTANMELDUNG

(11) **EP 4 642 161 A1**
(43) Veröffentlichungstag der Anmeldung: **29.10.2025**
(21) Anmeldenummer: 25166885.1
(22) Anmeldetag: 28.03.2025
(51) Int. Cl.: H05B 6/12, F24C 7/08

(54) **INDUKTIONSKOCHFELD UND SYSTEM EINES INDUKTIONSKOCHFELDS MIT EINER ARBEITSPLATTE**

(30) Priorität: 23.04.2024 DE 102024111402
(71) Anmelder: E.G.O. Elektro-Gerätebau GmbH, 75038 Oberderdingen (DE)
(72) Erfinder: Föller, Thomas, 74193 Schwaigern (DE); Fricker, Raphael, 75177 Pforzheim (DE)
(74) Vertreter: Patentanwälte Ruff, Wilhelm, Beier, Dauster & Partner mbB

(57) **Zusammenfassung**

Ein Induktionskochfeld weist interne Induktionsheizspulen zum induktiven Beheizen eines Kochgeschirrs und mindestens eine externe Induktionsspule zur induktiven Leistungsübertragung zu einem elektrischen Verbraucher, mindestens ein Leistungsteil samt Umrichter zur Leistungsversorgung der Induktionsheizspulen und der externen Induktionsspule sowie eine Kochfeldsteuerung auf. Es weist auch eine Kochfeldplatte, eine Bedieneinrichtung darunter, einen Versorgungsanschluss zur Energieversorgung des Induktionskochfelds von außen und ein Kochfeldgehäuse auf. Die Induktionsheizspulen sind innerhalb des Induktionskochfelds und unterhalb der Kochfeldplatte angeordnet. An dem Leistungsteil ist eine Anschlussleitung angeschlossen, an der die externe Induktionsspule angeschlossen ist zur Leistungsversorgung durch das Leistungsteil. Die externe Induktionsspule ist zur von dem Induktionskochfeld räumlich getrennten Montage außerhalb des Induktionskochfelds und für eine induktive Leistungsübertragung an einen elektrischen Verbraucher ausgebildet, der eine Empfängerspule aufweist, die induktiv mit der externen Induktionsspule koppelbar ist.

## Beschreibung

### ANWENDUNGSGEBIET UND STAND DER TECHNIK

Die Erfindung betrifft ein Induktionskochfeld sowie ein System, das eine solche Induktionskochfeld und eine Arbeitsplatte aufweist. Das Induktionskochfeld dient auch dazu, eine induktive Leistungsübertragung, auch WPT genannt, zu einem elektrischen Verbraucher wie einer Küchenmaschine odgl. zu bewirken, welche in dem elektrischen Verbraucher Strom bzw. elektrische Energie zu dessen Betrieb bereitstellt, siehe beispielsweise die EP 40 40 640 A1. Eine solche induktive Leistungsübertragung kann vorteilhaft nach dem Ki-Standard erfolgen.

### AUFGABE UND LÖSUNG

Der Erfindung liegt die Aufgabe zugrunde, ein eingangs genanntes Induktionskochfeld sowie ein genanntes System zu schaffen zum Betrieb eines solchen Induktionskochfelds, mit denen Probleme des Standes der Technik vermieden werden können und es insbesondere möglich ist, einen Betrieb des Induktionskochfelds zusammen mit einer induktiven Leistungsübertragung zu einem elektrischen Verbraucher zu ermöglichen.

Gelöst wird diese Aufgabe durch ein eingangs genanntes Induktionskochfeld mit den Merkmalen des Anspruchs 1 sowie durch ein System mit den Merkmalen des Anspruchs 13. Vorteilhafte sowie bevorzugte Ausgestaltungen der Erfindung sind Gegenstand der weiteren Ansprüche und werden im Folgenden näher erläutert. Dabei werden manche der Merkmale nur für das Induktionskochfeld oder nur für das System beschrieben. Sie sollen jedoch unabhängig davon sowohl für das Induktionskochfeld als auch für das System selbstständig und unabhängig voneinander gelten können. Der Wortlaut der Ansprüche wird durch ausdrückliche Bezugnahme zum Inhalt der Beschreibung gemacht.

Das Induktionskochfeld weist mindestens eine Induktionsheizspule zum induktiven Beheizen eines darüber angeordneten Kochgeschirrs auf, vorteilhaft ausgebildet wie üblich zum induktiven Beheizen, unter Umständen auch mit einer Zweitfunktion zur induktiven Leistungsübertragung. Es weist mindestens eine externe Induktionsspule zur induktiven Leistungsübertragung an einen elektrischen Verbraucher auf, vorteilhaft nach dem Ki-Standard, oder ist zumindest zum Anschluss und anschließenden Betrieb einer solchen externen Induktionsspule ausgebildet. Das Induktionskochfeld steuert dann den Betrieb der externen Induktionsspule mit einer Bedieneinrichtung, die es aufweist. Es ist mindestens ein Leistungsteil samt Umrichter zur Leistungsversorgung der mindestens einen Induktionsheizspule und der mindestens einen externen Induktionsspule vorgesehen, vorteilhaft aufgeteilt auf mehrere Baueinheiten. Des Weiteren weist es eine Kochfeldsteuerung und eine Kochfeldplatte auf, an bzw. unter der die Bedieneinrichtung angeordnet ist. Auch die Induktionsheizspulen sind unter der Kochfeldplatte angeordnet. Das Induktionskochfeld weist auch einen Versorgungsanschluss zur Energieversorgung des Induktionskochfelds von außen auf sowie mindestens ein Kochfeldgehäuse. In diesem mindestens einen bzw. in jedem Kochfeldgehäuse sind das Leistungsteil bzw. die Leistungsversorgung angeordnet. Auch die Kochfeldsteuerung kann darin angeordnet sein, möglicherweise auch die mindestens eine Induktionsheizspule, wobei diese auch darüber angeordnet sein kann. Der genannte Versorgungsanschluss kann an oder in dem Kochfeldgehäuse angeordnet sein, vorteilhaft auch Anschlüsse an die Induktionsheizspulen und/oder die mindestens eine externe Induktionsspule.

Erfindungsgemäß ist die mindestens eine Induktionsheizspule innerhalb des Kochfeldgehäuses oder innerhalb des Induktionskochfelds angeordnet, nämlich unterhalb der Kochfeldplatte. Das Induktionskochfeld kann eine einzige zusammenhängende Baueinheit sein, möglicherweise aber auch auf zwei oder drei Baueinheiten aufgeteilt sein, die dann untereinander verbunden sind mittels Leitungen odgl.. An dem Leistungsteil ist mindestens eine Anschlussleitung angeschlossen, an der die externe Induktionsspule angeschlossen ist oder angeschlossen werden kann zu ihrer Leistungsversorgung durch das Leistungsteil und den darin angeordneten Umrichter. Die mindestens eine externe Induktionsspule ist ausgebildet zur von dem Induktionskochfeld räumlich getrennten Montage, also außerhalb des Kochfeldgehäuses bzw. des Induktionskochfelds. Sie ist ausgebildet für eine induktive Leistungsübertragung, beispielsweise nach dem WPT- oder dem Ki-Standard, an einen elektrischen Verbraucher. Dieser elektrische Verbraucher weist eine Empfängerspule auf, die induktiv mit der externen Induktionsspule koppelbar ist. Ein solcher elektrischer Verbraucher kann ein Küchengerät, ein Mixer oder ein elektrisches Kleingerät sein.

Durch die externe Anordnung der Induktionsspule kann sie frei von dem Induktionskochfeld und an dessen jeweilige Einbausituation angepasst angeordnet werden. Sie kann genau an das Induktionskochfeld angepasst sein und zum Betrieb mit dessen Leistungsversorgung ausgebildet sein sowie vor allem auch über deren Bedieneinrichtung ausgebildet sein. Somit benötigt man für die externe Induktionsspule keine eigene Leistungsversorgung und keine Bedieneinrichtung, was den Bauteilaufwand und auch den Montageaufwand erheblich reduziert. Das Induktionskochfeld kann in direkter Kombination mit der angeschlossenen externen Induktionsspule montiert, verkauft und eingebaut werden. Alternativ kann die externe Induktionsspule vom selben Hersteller wie des Induktionskochfelds hergestellt und verkauft werden, aber möglicherweise in unterschiedlichen Ausgestaltungen und vor allem auch nur optional, also wenn es der Käufer des Induktionskochfelds direkt wünscht. Die externe Induktionsspule kann möglicherweise auch nachgerüstet werden, der elektrische Anschluss an das Induktionskochfeld ist dann einfach möglich. Die Induktionsheizspulen und die externe Induktionsspule können ähnlich ausgebildet sein, möglicherweise sogar teilweise oder ganz gleichartig. Sie können jeweils auch die andere Funktion ausüben, sind aber an sich entweder für ein induktives Beheizen oder für eine induktive Leistungsübertragung optimiert.

In Ausgestaltung der Erfindung kann an dem Leistungsteil neben Anschlüssen für die mindestens eine eingebaute Induktionsheizspule ein weiterer Zusatz-Anschluss vorgesehen sein. Dieser Zusatz-Anschluss ist zur elektrischen Verbindung mit der Anschlussleitung ausgebildet, wobei die damit verbundene Anschlussleitung aus dem Kochfeldgehäuse herausgeführt ist bzw. davon absteht oder abgeht. An dem Zusatz-Anschluss liegt dabei eine von dem Leistungsteil bzw. dem Umrichter umgerichtete Spannung an, mit der die externe Induktionsspule direkt versorgt werden kann.

In weiterer Ausgestaltung der Erfindung kann die Anschlussleitung lösbar mit dem Zusatz-Anschluss verbunden sein, also mit dem Induktionskochfeld, wozu vorzugsweise eine Steckverbindung oder eine Schraubverbindung genutzt werden kann. Dann sind evtl. ein Austausch oder eine Längenanpassung möglich. Alternativ kann sie unlösbar mit dem Zusatz-Anschluss verbunden sein, so dass der Anschluss bei der Montage selbst schon vorgenommen worden ist. In gleicher Form kann ein elektrischer Anschluss der Anschlussleitung an die externe Induktionsspule ausgebildet sein.

Es kann auch vorgesehen sein, dass an dem Leistungsteil so viele Anschlüsse bzw. genauso viele Anschlüsse vorgesehen sind wie Induktionsheizspulen in dem Induktionskochfeld angeordnet sind oder angeordnet sein können. Dabei ist eine dieser Induktionsheizspulen entfernt, also gar nicht erst eingebaut, und an deren elektrischem Anschluss ist die Anschlussleitung für die externe Induktionsspule angeschlossen. Dabei können wiederum die Anschlüsse als Steckverbindung oder als Schraubverbindung ausgebildet sein.

In Weiterbildung der Erfindung kann die Kochfeldsteuerung dazu ausgebildet sein, mittels der Leistungsversorgung die externe Induktionsspule zur induktiven Leistungsübertragung an den elektrischen Verbraucher derart anzusteuern, dass eine Leistungsanforderung von dem elektrischen Verbraucher über die induktive Kopplung zwischen Empfängerspule und externer Induktionsspule an das Leistungsteil und an die Kochfeldsteuerung übertragen wird. Dort wird die Leistungsanforderung umgesetzt zur gewünschten induktiven Leistungsübertragung mittels der externen Induktionsspule an den elektrischen Verbraucher. Die externe Induktionsspule erzeugt dann genau die Leistung, die der elektrische Verbraucher benötigt und angefordert hat.

Vorteilhaft ist die externe Induktionsspule zur induktiven Leistungsübertragung an den elektrischen Verbraucher in einem von dem Kochfeldgehäuse separaten Spulengehäuse angeordnet ist, also in einem eigenen Gehäuse. In diesem Spulengehäuse können unterhalb der Induktionsspule Ferritkörper angeordnet sein zur an sich bekannten Magnetfeldführung. Weitere an sich bekannte Teile können daran vorgesehen sein. Der Vorteil eines eigenen Spulengehäuses liegt auch daran, dass die externe Induktionsspule dann elektrisch isoliert ist und ggf. einfach montiert werden kann, beispielsweise mittels Befestigungsabschnitten.

Das genannte Spulengehäuse sollte frei von jeglicher Bedieneinrichtung sein bzw. keine eigene Bedieneinrichtung aufweisen, insbesondere also keine Bedienelemente, vorzugsweise auch keine Anzeige.

Das Spulengehäuse kann eine daran oder darin vorgesehene elektrische Anschlusseinrichtung für die Anschlussleitung aufweisen, wobei die externe Induktionsspule zur induktiven Leistungsübertragung mit einer Spulenlitze mit der elektrischen Anschlusseinrichtung verbunden werden kann. Vorteilhaft kann sie fest verbunden sein. Dabei kann die Anschlussleitung lösbar mit der elektrischen Anschlusseinrichtung verbunden werden, insbesondere als Steckverbindung oder als Schraubverbindung. So kann einfach und schnell ein elektrischer Anschluss hergestellt werden.

In Weiterbildung der Erfindung kann von dem Spulengehäuse eine fest und unlösbar mit der externen Induktionsspule verbundene Anschlussleitung wegführen. Diese Anschlussleitung kann eine verlängerte Spulenlitze der externen Induktionsspule sein oder aufweisen. Dabei kann die Anschlussleitung an einem freien Ende ausgebildet sein, um elektrische Verbindung herzustellen, welche insbesondere als Steckverbindung oder als Schraubverbindung ausgebildet sein kann.

Es kann vorgesehen sein, dass die externe Induktionsspule eine Erkennungsfunktion aufweist oder eine Sensoreinrichtung daran angeordnet ist, die permanent aktiviert sind, um so jederzeit das Aufsetzen des elektrischen Verbrauchers zu dessen induktiver Leistungsversorgung zu erkennen. Dazu braucht das Induktionskochfeld auch nicht eigens eingeschaltet bzw. aktiviert zu werden, dies kann dann die externe Induktionsspule bewirken, um damit bedient zu werden. Möglicherweise kann in dem vorgenannten Spulengehäuse ein Mikrocontroller angeordnet sein, um Sensoren an der externen Induktionsspule auszuwerten, um das Aufsetzen des elektrischen Verbrauchers zu erkennen odgl..

In Ausgestaltung der Erfindung kann die Anschlussleitung eine mehradrige Anschlussleitung sein, wobei sie vorzugsweise zwei Leiter aufweist für eine Übertragung von Leistung, die ausreichend stark sind für eine zu erwartende zu übertragende Leistung. Es können auch noch zwei oder drei Leiter für eine Übertragung von Daten bzw. Signalen oder Hilfsspannungen vorhanden sein, beispielsweise um Signale eines Temperatursensors schon an der externen Induktionsspule direkt daran aufzubereiten. Dann ist eine nachfolgende Signalübertragung weniger störungsanfällig.

In Ausgestaltung der Erfindung kann in dem Leistungsteil mindestens eine Schalteinrichtung, vorzugsweise ein Relais oder Leistungshalbleiterschalter, vorgesehen sein, um eine umgerichtete Spannung des Umrichters entweder mit einer angeschlossenen Induktionsheizspule im Kochfeldgehäuse zu verbinden. Alternativ kann sie mit der angeschlossenen externen Induktionsspule verbunden werden, die ja außerhalb angeordnet ist.

In Weiterbildung der Erfindung können zwei Anschlussleitungen aus dem Kochfeldgehäuse herausgeführt sein, um zwei solcher externer Induktionsspulen für eine induktive Leistungsübertragung anschließen zu können, evtl. auch noch mehr. Vorteilhaft ist pro anschließbarer externer Induktionsspule genau eine einzige Anschlussleitung vorgesehen.

Ein Induktionskochfeld kann zwei bis sechs Induktionsheizspulen aufweisen, die mindestens 30 % der neben der Kochfeldsteuerung zur Verfügung stehenden Fläche einnehmen können. Vorzugsweise können es 40 % bis 80 % sein. Somit können die Induktionsheizspulen einen signifikanten Teil oder sogar einen überwiegenden Teil der Fläche einnehmen.

In Weiterbildung der Erfindung kann die externe Induktionsspule auch zum induktiven Beheizen von darüber angeordneten Kochgefäßen ausgebildet sein, sie kann auch dazu entsprechend angesteuert werden. Dann unterscheidet sich ihre Ansteuerung eigentlich nicht grundsätzlich von derjenigen der internen Induktionsheizspulen. In entsprechender Form kann es dann auch vorgesehen sein, dass mindestens einer der Induktionsheizspulen für eine induktive Leistungsübertragung an den elektrischen Verbraucher ausgebildet ist. Diese kann so ausgebildet sein wie bei der externen Induktionsspule, vorteilhaft ebenfalls nach dem Ki-Standard.

Vorteilhaft kann das Induktionskochfeld zwei Kochfeldgehäuse aufweisen, vorzugsweise mit einer einzigen gemeinsamen Kochfeldplatte, alternativ auch mit zwei oder mehr Kochfeldplatten, aber als ein einziges Gerät. Jedes Kochfeldgehäuse kann ein Leistungsteil samt Umrichter aufweisen, vorzugsweise genau ein Leistungsteil oder genau zwei Leistungsteile.

Es können in einer ersten Ausgestaltung der Erfindung in oder an einem von zwei Kochfeldgehäusen nur Induktionsheizspulen angeordnet sein ohne Anschlussmöglichkeit für die externe Induktionsspule. In dem anderen Kochfeldgehäuse ist dann ein zuvor beschriebener Zusatz-Anschluss für die externe Induktionsspule vorgesehen.

Bei einem erfindungsgemäßen System sind ein vorbeschriebenes Induktionskochfeld und eine Arbeitsplatte vorgesehen, wobei das Induktionskochfeld an der Arbeitsplatte angeordnet ist, insbesondere in einen Ausschnitt eingesetzt ist. Das Induktionskochfeld weist eine Kochfeldplatte zum Aufstellen von Kochgeschirr odgl. zum induktiven Beheizen auf, wie dies an sich bekannt ist. Dabei ist unter dieser Arbeitsplatte oder unter einer weiteren Arbeitsplatte des Systems die mindestens eine externe Induktionsspule angeordnet, wobei sie mittels der Anschlussleitung mit dem Induktionskochfeld verbunden ist.

Vorteilhaft ist die Anschlussleitung die einzige elektrische und/oder signalübertragende Verbindung der externen Induktionsspule nach außen bzw. an das Induktionskochfeld. Die externe Induktionsspule sollte dabei keine integrierte Leistungsumwandlung aufweisen, da dies effizienter in dem Induktionskochfeld selbst sowie in dessen Leistungsteil erfolgt.

In Weiterbildung der Erfindung kann die externe Induktionsspule in dem vorbeschriebenen Spulengehäuse angeordnet sein, wobei dieses Spulengehäuse von unten an der Arbeitsplatte befestigt ist, insbesondere lösbar befestigt ist. Vorzugsweise weist die Arbeitsplatte oberhalb des Spulengehäuses und somit oberhalb der externen Induktionsspule in einem Ausnehmungsbereich eine geringere Dicke auf als in den übrigen Bereichen. Er ist insbesondere mechanisch dünner gemacht mittels eines Sacklochs odgl., wobei das Spulengehäuse in diesen Ausnehmungsbereich hineinreicht.

Die Arbeitsplatte kann in dem Bereich, in dem die externe Induktionsspule angeordnet ist, eine Dicke von maximal 12 mm aufweisen, vorzugsweise kann sie zwischen 1 mm und 8 mm liegen. Vorteilhaft besteht sie aus Material, das für Magnetfelder durchlässig ist. Derartige Materialien sind bekannt. Die externe Induktionsspule sollte vorteilhaft planparallel zu der Arbeitsplatte angeordnet sein, unter der sie befestigt ist.

In Weiterbildung der Erfindung kann die Anschlussleitung vom Leistungsteil an eine außerhalb des Kochfeldgehäuses angeordnete Anschlussbox geführt sein, wobei sie mit dieser elektrisch verbunden ist. Eine elektrische Verbindung kann an Schraubklemmen oder eine Steckverbindung erfolgen. An dieser Anschlussbox kann mindestens eine externe Induktionsspule zur induktiven Leistungsübertragung angeschlossen sein, wobei sie vorzugsweise an einem Tragblech des Induktionskochfelds, also als Teil des Geräts, oder direkt an der Arbeitsplatte befestigt sein kann.

In der Arbeitsplatte kann vorteilhaft ein Kanal für die Anschlussleitung vorgesehen sein, insbesondere hineingefräst sein. Die Anschlussleitung kann innerhalb des Kanals verlaufen und in eingebautem Zustand nicht aus dem Kanal bzw. der Arbeitsplatte hervorstehen. Dabei sollte sie vorzugsweise in dem Kanal befestigt sein, insbesondere mittels Kleben, Klemmen, oder sonstiger Sicherungen. Dies kann so ablaufen, dass zuerst in die Arbeitsplatte ein Kanal gefräst wird, in den die Anschlussleitung einbracht und befestigt wird. Dadurch müssen an Unterschränken, Schubladen usw. keine Ausnehmungen gemacht werden, die Anschlussleitung könnte auch problemlos über einer Spülmaschine odgl. verlegt werden. Es ist keine zusätzliche die Leitungsbefestigung nötig.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine Schrägansicht auf ein erfindungsgemäßes System mit einer Arbeitsplatte, an der ein erfindungsgemäßes Induktionskochfeld angeordnet ist mit einer außerhalb bzw. extern davon angeordneten Induktionsspule zur induktiven Leistungsübertragung,
- Fig. 2: eine Abwandlung der Darstellung aus Fig. 1 mit zur Verdeutlichung entfernter Kochfeldplatte und elektrischem Verbraucher über der externen Induktionsspule zu seiner Leistungsversorgung,
- Fig. 3: eine Ansicht des Systems aus Fig. 1 von unten, wobei die externe Induktionsspule mit einer durchgehenden Anschlussleitung mit dem Induktionskochfeld verbunden ist,
- Fig. 4: eine Abwandlung der Fig. 3, bei der die externe Induktionsspule mit einer unterbrochenen Anschlussleitung an einer an der Unterseite der Arbeitsplatte befestigte Anschlussbox angeschlossen ist,
- Fig. 5: eine Darstellung eines erfindungsgemäßen Induktionskochfelds mit zwei Kochfeldgehäusen, mehreren internen Induktionsheizspulen und einer außerhalb davon angeordneten externen Induktionsspule,
- Fig. 6: die Darstellung aus Fig. 5 mit einem Tragblech zwischen den Kochfeldgehäusen und den Induktionsheizspulen sowie mit einer zusätzlichen Induktionsheizspule, die im Wechsel mit der externen Induktionsspule angesteuert werden kann,
- Fig. 7: eine Unteransicht einer Abwandlung eines erfindungsgemäßen Induktionskochfelds mit Details zum Anschluss der externen Induktionsspule,
- Fig. 8: eine weitere Abwandlung eines erfindungsgemäßen Systems ähnlich Fig. 3 mit mehreren Anschlusssteckern für mehrere externe Induktionsspulen, an denen je eine externe Induktionsspule angeschlossen sein kann,
- Fig. 9: eine weitere Abwandlung eines erfindungsgemäßen Systems mit einem Induktionskochfeld mit zwei Kochfeldgehäusen, wobei jedes davon mit einer externen Induktionsspule zur induktiven Leistungsübertragung verbunden ist, und
- Fig. 10: eine vergrößerte teilgeschnittene Darstellung einer externen Induktionsspule zur induktiven Leistungsübertragung in einem eigenen Spulengehäuse.

### DETAILLIERTE BESCHREIBUNG DER AUSFÜHRUNGSBEISPIELE

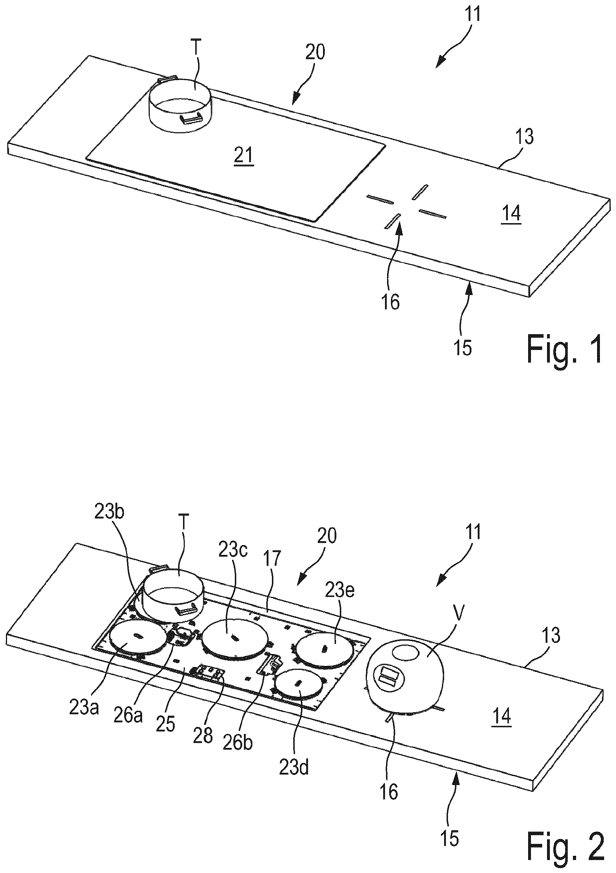

In der Fig. 1 ist ein erfindungsgemäßes System 11 bestehend aus einer Arbeitsplatte 13 und einem erfindungsgemäßen Induktionskochfeld 20 dargestellt. Die Arbeitsplatte 13 weist eine Oberseite 14 auf, auf der etwas rechts neben dem Induktionskochfeld 20 eine Markierung 16 vorgesehen ist. Hier kann entsprechend der Fig. 2 ein eingangs erläuterter elektrischer Verbraucher V, beispielsweise ein Mixer oder eine Küchenmaschine, aufgesetzt und betrieben bzw. induktiv mit Energie versorgt werden. Vorteilhaft kann eine solche induktive Leistungsübertragung nach dem Ki-Standard erfolgen, siehe beispielsweise die EP 40 40 640 A1. Auf einer Kochfeldplatte 21 des Induktionskochfelds 20 ist hinten links ein Topf T aufgestellt zum induktiven Beheizen auf bekannte Art und Weise.

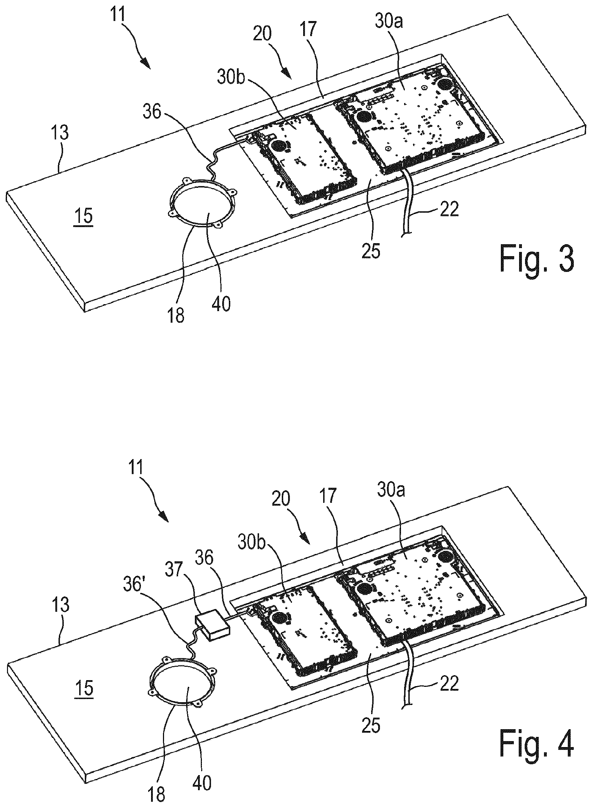

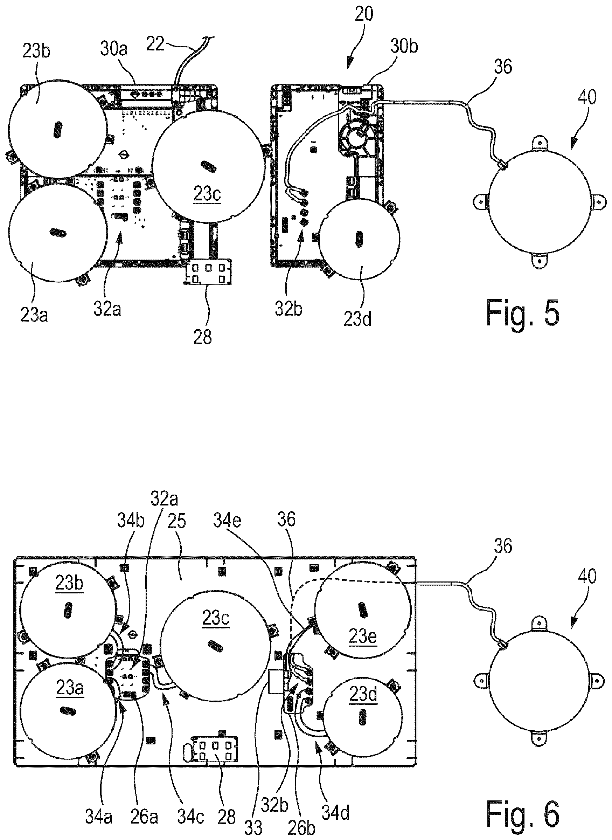

Die Darstellung des Systems 11 entsprechend der Fig. 2 zeigt, dass beim Induktionskochfeld 20 die Kochfeldplatte 21 entfernt ist und sozusagen das Innere des Induktionskochfelds 20 etwas besser zu erkennen ist. Es ist zu erkennen, dass in der Arbeitsplatte 13 ein durchgehender rechteckiger Ausschnitt 17 vorgesehen ist, insbesondere herausgesägt oder herausgefräst ist. In die Öffnung bzw. den Ausschnitt 17 ist das Induktionskochfeld 20 eingesetzt, siehe auch die Darstellung der Fig. 3 desselben Systems 11 von unten. Das Induktionskochfeld 20 weist hier fünf Induktionsheizspulen 23a bis 23e auf, die auf einem sogenannten Tragblech 25 angeordnet sind. Sie sind hauptsächlich für einen betrieb zum induktiven Beheizen ausgebildet bzw. optimiert. Das Tragblech 25 weist zwei Anschlussöffnungen 26a und 26b auf, durch welche die jeweils am nächsten angeordneten Induktionsheizspulen 23a bis 23e auf bekannte Art und Weise elektrisch angeschlossen werden können. Ein solcher Anschluss betrifft sowohl zwei Leiter für die elektrische Leistungsversorgung als auch zwei oder mehr Signalleitungen für Temperatursensoren, die oben auf den Induktionsheizspulen 23 angeordnet sind. Hierzu wird verwiesen auf die Fig. 5 und 6.

Vor der mittigen Induktionsheizspule 23c ist auf dem Tragblech 25 eine Bedieneinrichtung 28 angeordnet. Sie kann ebenfalls auf bekannte Art und Weise ausgebildet sein, insbesondere mit Leuchtanzeigen, kapazitiven Bedienelementen und einer notwendigen Kochfeldsteuerung, insbesondere gebildet durch einen Mikrocontroller.

Die Fig. 3 zeigt das erfindungsgemäße System 11 mit der Arbeitsplatte 13 und dem erfindungsgemäßen Induktionskochfeld 20 von unten. Hier sind der Ausschnitt 17 und die Ausnehmung 18 in der Arbeitsplatte 13 gut zu erkennen. Die Ausnehmung 18 ist nach Art eines Sacklochs ausgebildet, die Arbeitsplatte 13 weist hier also noch eine deutlich verringerte Dicke auf. Vorteilhaft beträgt diese verringerte Dicke zwischen 3 mm und 8 mm, während ansonsten die Arbeitsplatte 13 eine Dicke von 15 mm bis 25 mm bei Stein aufweisen kann und gut 35 mm und mehr bei Holz bzw. als Spanplatte odgl..

Das Induktionskochfeld 20 weist an einer Unterseite des Tragblechs 25 zwei Kochfeldgehäuse 30a und 30b auf, wobei das Kochfeldgehäuse 30b sichtbar kleiner ausgebildet ist. In dem größeren Kochfeldgehäuse 30a ist ein Leistungsteil samt Umrichter zur Leistungsversorgung der drei Induktionsheizspulen 23a bis 23c angeordnet. Es könnte auch ein einziges gemeinsames Kochfeldgehäuse sein. Ähnlich könnte auch die Kochfeldplatte 21 zweigeteilt sein, beispielsweise mit einem Downdraft-Abzug dazwischen.

Die externe Induktionsspule 40 ist in die zuvor beschriebene Ausnehmung 18 eingesetzt und ragt in diese hinein. Sie kann auf verschiedene Art und Weise befestigt werden, vorteilhaft festgeschraubt werden. Eine durchgehende Anschlussleitung 36 ist gut zu erkennen, die die externe Induktionsspule 40 mit dem Induktionskochfeld 20 bzw. mit dem kleineren Kochfeldgehäuse 30b verbindet. Die Anschlussleitung 36 kann vorteilhaft an der Unterseite 15 der Arbeitsplatte 13 befestigt sein, beispielsweise mittels Kabelschellen oder Klebstoff. Alternativ kann in die Unterseite 15 ähnlich wie die Ausnehmung 18 eine Art Kabelkanal eingefräst sein, wodurch ähnlich wie die externe Induktionsspule 40 kein Teil über die Unterseite 15 hervorsteht. Dann ist eine Montage der Arbeitsplatte 13 über Unterschränken oder anderen Elektrogeräten problemlos möglich.

In der Fig. 4 ist ein alternativer elektrischer Anschluss für die externe Induktionsspule 40 an das Kochfeldgehäuse 30b dargestellt. Von dem Kochfeldgehäuse 30b geht wiederum eine Anschlussleitung 36 ab, allerdings geht sie an eine Anschlussbox 37. Diese Anschlussbox 37 ist an der Unterseite 15 der Arbeitsplatte 13 befestigt. Sie kann ähnlich wie bei elektrischen Leitungen bekannt eine Art Verteilerdose darstellen und vorteilhaft innen Schraub- bzw. Klemmanschlüsse aufweisen, alternativ auch Steckanschlüsse. Von der externen Induktionsspule 40 kommt eine weitere Anschlussleitung 36', die in der Anschlussbox 37 auf dort vorgesehene Art und Weise mit der Anschlussleitung 36 verbunden wird. Dadurch kann möglicherweise der elektrische Anschluss der externen Induktionsspule 40 vereinfacht werden. Des Weiteren kann so vorgesehen sein, dass an der externen Induktionsspule 40 die Anschlussleitung 36' fest angebracht ist, insbesondere mit einer direkt weitergeführten Spulenlitze. Sie kann eine vorgegebene Länge von beispielsweise 60 cm oder 100 cm aufweisen. Wird die externe Induktionsspule 40 entsprechend nahe an dem Induktionskochfeld 20 bzw. an den Anschlüssen 32 vorgesehen, dass diese Anschlussleitung 36' von der Länge her ausreicht, kann sie direkt an diese Anschlüsse 32 angeschlossen werden. Soll sie dagegen weiter entfernt vorgesehen werden, als es die Länge der Anschlussleitung 36' erlaubt, kann eine solche Anschlussbox 37 samt zusätzlicher Anschlussleitung 36 vorgesehen sein. Diese Anschlussleitung 36 kann dann als relativ einfaches Kabel ausgebildet sein und zwei Leiter dickeren Querschnitts für die Übertragung der Leistung und weitere vorgenannte Leiter für Daten bzw. Signale und Hilfsspannungen aufweisen. Diese zusätzliche Anschlussleitung 36 kann entweder in verschiedenen Längen angeboten werden und vorkonfektioniert sein, so dass sie einerseits mit den Anschlüssen 32b des Kochfeldgehäuses 30b verbunden sein kann oder verbunden werden kann. Das andere Ende kann mit Anschlüssen der Anschlussbox 37 verbunden sein oder verbunden werden. So ist eine Längenanpassung möglich. Unter Umständen kann auch für die Anschlussbox 37 in der Unterseite 15 der Arbeitsplatte 13 eine entsprechende Ausnehmung geschaffen werden.

Die Leistungsteile in den Kochfeldgehäusen 30 weisen gemäß Fig. 5 erkennbare Anschlüsse 32a auf, vorteilhaft auf einem Bauteilträger oder einer Leiterplatte, auf deren Seite, die in Fig. 5 nicht sichtbar ist, weitere Elektronikbauteile bzw. elektrische Bauelemente angeordnet sein können. Die Anschlüsse 32a sind vorteilhaft als übliche Schraubklemmen für Induktionsheizspulen ausgebildet. Hier können Anschlusskabel 34a bis 34c entsprechend Fig. 6 angeschlossen sein, die von den Induktionsheizspulen 23a bis 23c abgehen. Vorteilhaft bestehen diese Anschlusskabel eben aus weitergeführter Spulenlitze der jeweiligen Induktionsheizspule 23. Diese sind an ihren Enden abisoliert und mit entsprechend leitfähigen Endbereichen versehen, um sie mit gutem Kontakt an den Anschlüssen 32a zu verbinden. Nicht dargestellt sind Datenkabel oder Datenleitungen wie für die Temperatursensoren, die in den genannten Anschlusskabeln 34 enthalten sein können und an separate Verbinder gehen, vorteilhaft an Steckverbinder. Dies ist aber jeweils aus dem Stand der Technik bekannt.

Oberhalb des kleineren Kochfeldgehäuses 30b sind Anschlüsse 32b vorgesehen, die grundsätzlich gleich ausgebildet sind wie die Anschlüsse 32a. Gemäß Fig. 6 ist die Induktionsheizspule 23d mittels eines Anschlusskabels 34d mit zweien dieser Anschlüsse 32b verbunden. Eine hinten rechts vorgesehene Induktionsheizspule 23e ist mit einem Anschlusskabel 34e angeschlossen.

Daraus ist zu erkennen, dass in dem Kochfeldgehäuse 30a das Leistungsteil samt Umrichter größer und stärker ausgebildet ist als dasjenige im Kochfeldgehäuse 30b. Ein Leistungsteil samt Umrichter kann beispielsweise als sogenanntes Zweier-Modul ausgebildet sein, also zur Leistungsversorgung von zwei Induktionsheizspulen dienen. In dem großen Kochfeldgehäuse 30a sind zwei solche Zweier-Module vorgesehen, alternativ ein Vierer-Modul, in dem Kochfeldgehäuse 30b nur ein einziges solches Zweier-Modul. Dies kann auch in der Ansicht von unten der Fig. 3 und 4 an den vorgesehenen Lüfteröffnungen erkannt werden, von denen jeweils eine für ein Zweier-Modul vorgesehen ist.

Das Induktionskochfeld 20 ist also eine einzige Funktionseinheit bzw. ein Gerät, weist aber zwei Kochfeldgehäuse 30 und mehrere Leistungsteile auf. Für das Induktionskochfeld 20 ist ein einziger Versorgungsanschluss 22 nach außen vorgesehen. Dieser kann auf übliche Weise ein fünfadriges, in einem Haus fest installiertes Kabel sein, welches hier an dem größeren Kochfeldgehäuse 30a an einer entsprechenden Anschlussdose angeschlossen wird. Es ist ein Drei-Phasen-Anschluss für maximale Leistung. Eine Energieversorgung des kleineren Kochfeldgehäuses 30b erfolgt durch eine Verbindungsleitung zwischen den beiden Kochfeldgehäusen 30a und 30b, wobei eine solche Verbindung ohnehin vorgesehen sein muss, da ja auch beispielsweise nur eine einzige Bedieneinrichtung 28 vorgesehen ist.

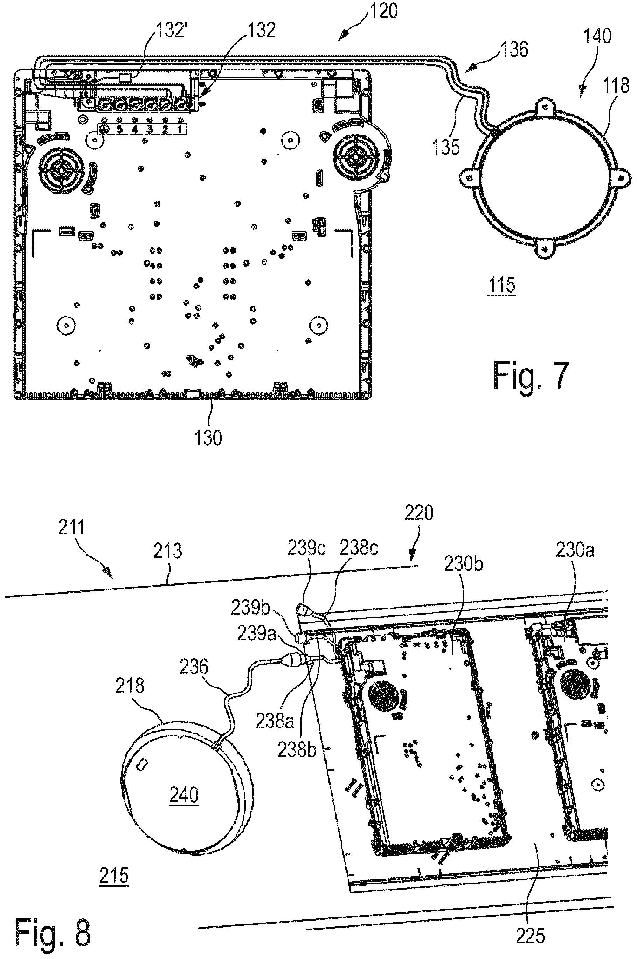

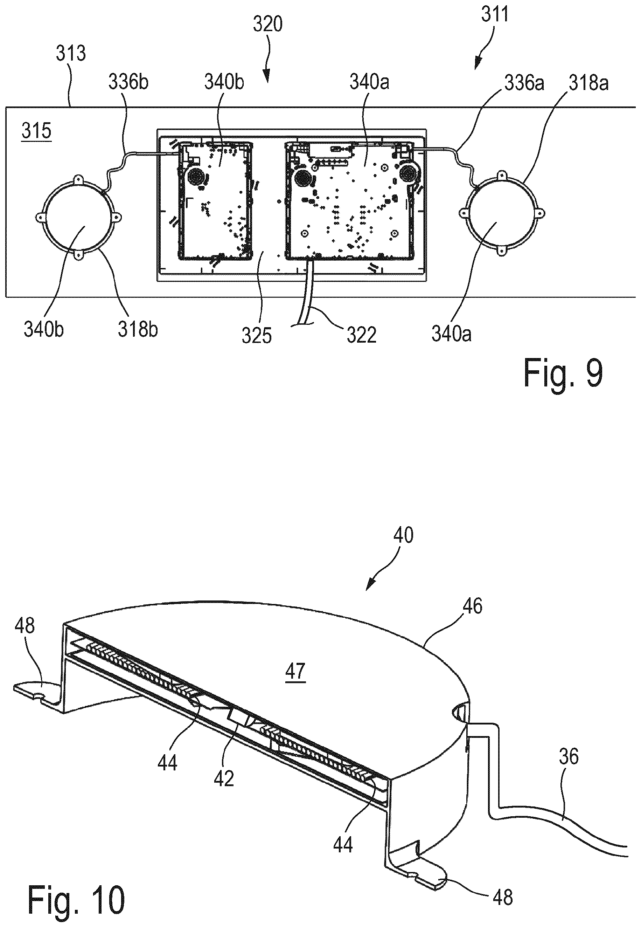

Wie die Fig. 5 zeigt, weist das dortige Induktionskochfeld 20 hinten rechts keine Induktionsheizspule auf, anders als in der Darstellung der Fig. 2 und Fig. 6. An den oberen beiden Anschlüssen 32b ist eine Anschlussleitung 36 angeschlossen, die rechts aus dem Kochfeldgehäuse 30b herausläuft und zu einer externen Induktionsspule 40 führt. Der Aufbau dieser externen Induktionsspule 40 wird später mit Bezug zur Fig. 10 noch näher im Detail erläutert. Die Anschlussleitung 36 kann entweder eine verlängerte Spulenlitze der externen Induktionsspule 40 sein, wie es zuvor für die Induktionsheizspulen 23 beschrieben worden ist. Zusätzlich kann die Anschlussleitung 36 auch hier nicht dargestellte zusätzliche Leiter aufweisen, mit denen Daten bzw. Signale oder Hilfsspannungen übertragen werden können. Dies dient zum elektrischen Anschluss von Sensoren und beispielsweise Steuerbauteilen oder einem Mikrocontroller an der externen Induktionsspule 40. Dies ist in Fig. 7 dargestellt, worauf verwiesen wird.

Bei der Ausgestaltung des Induktionskochfelds 20 gemäß der Fig. 5 ist die externe Induktionsspule 40 mit ihrer Anschlussleitung 36 an die beiden oberen Anschlüsse 32b im Kochfeldgehäuse 30b fest angeschlossen. Sie kann somit von einer Kochfeldsteuerung und der Bedieneinrichtung 28 anstelle der Induktionsheizspule 23e gemäß der Fig. 2 und 6 angesteuert werden, die hier nicht vorhanden ist. Das Induktionskochfeld 20 weist dann vier Induktionsheizspulen 23a bis 23d auf sowie die externe Induktionsspule 40, mit der der elektrische Verbraucher V gemäß Fig. 2 mit Leistung bzw. Energie versorgt werden kann. Alternativ kann die externe Induktionsspule 40 auch so angesteuert werden, dass über ihr aufgestellte Töpfe T odgl. induktiv beheizt werden können. Dann arbeitet die externe Induktionsspule 40 wie eine der Induktionsheizspulen 23. Da über ihr aber keine temperaturbeständige Kochfeldplatte 21 vorgesehen ist, sondern nur die Arbeitsplatte 13, sollte ihre Leistung zum induktiven Beheizen begrenzt werden bzw. sollten gewisse Temperaturen nicht überschritten werden. Dazu kann, wie eingangs erläutert worden ist, auch in der externen Induktionsspule 40 vorteilhaft ein Temperatursensor 42 gemäß Fig. 10 vorgesehen sein. In entsprechender Abwandlung können auch eine oder mehrere oder jede der Induktionsheizspulen 23a bis 23d ausgebildet sein für eine induktive Leistungsübertragung nach einem eingangs erläuterten Ki-Standard oder allgemein als WPT zusätzlich zu ihrer Funktion als induktive Beheizung.

Eine alternative Ausgestaltung für das Induktionskochfeld 20 ist in der Fig. 6 dargestellt. Hier sind in dem kleinen Kochfeldgehäuse 30b sechs Anschlüsse 32b unterhalb der Anschlussöffnung 26b vorhanden, zwei links und vier rechts. Die beiden Induktionsheizspulen 23d und 23e sind auf zuvor beschriebene Art und Weise mittels Anschlusskabeln 34d und 34e mit jeweils zweien dieser Anschlüsse 32b verbunden, nämlich rechts unten und links. Die externe Induktionsspule 40 ist mit ihrer Anschlussleitung 36, die teilweise gestrichelt dargestellt ist, mit dem letzten Paar von Anschlüssen 32b rechts oben verbunden. Somit sind alle drei Spulen, also die zwei Induktionsheizspulen 23d und 23e sowie die externe Induktionsspule 40e, dauerhaft und fest mit dem Induktionskochfeld 20 verbunden. Wenn in dem entsprechenden Kochfeldgehäuse 30b aber nur ein Leistungsteil samt Umrichter für zwei Spulen vorgesehen ist, so geht dies nicht auf. Deswegen ist in dem Kochfeldgehäuse 30b ein Relaisschalter 33 vorgesehen, der alternativ auch als Halbleiterschalter ausgebildet sein könnte. Durch ihn kann eine Kochfeldsteuerung entweder über die entsprechenden Anschlüsse 32b rechts oben die externe Induktionsspule 40 ansteuern oder beispielsweise über die entsprechenden Anschlüsse 32b links die hintere Induktionsheizspule 23e. Bei dieser Lösung kann das entsprechende Zweier-Modul zwei Spulen betreiben, entweder eben beide Induktionsheizspulen 23d und 23e oder nur eine davon sowie die externe Induktionsspule 40. Bezüglich der vorgenannten Datenleitungen in der Anschlussleitung 36 für die externe Induktionsspule 40 spielt dies keine Rolle, sie können in weitgehend beliebiger Anzahl an das Induktionskochfeld 20 angeschlossen sein. Vorteil des erhöhten Bauteil-Aufwands ist eben, dass dann, wenn die externe Induktionsspule 40 nicht benötigt wird, alle fünf Induktionsheizspulen 23a bis 23e zur Verfügung stehen und jeweils mit voller Leistung verwendet werden können.

In der Fig. 7 ist ein etwas anders ausgebildetes erfindungsgemäßes Induktionskochfeld 111 von unten dargestellt in einer grundsätzlich ähnlichen Einbausituation gemäß den Fig. 1 bis 3. Allerdings weist dieses Induktionskochfeld 111 nur ein einziges Kochfeldgehäuse 130 auf, welches aufgrund der Größe und den zwei Öffnungen für Lüfter für insgesamt vier Induktionsheizspulen ausgelegt sein könnte. Vorteilhaft weist das Leistungsteil zwei Zweier-Module auf, ähnlich wie im zuvor beschriebenen Induktionskochfeld 11 im größeren Kochfeldgehäuse 30a. Auch hier ist neben nicht dargestellten Induktionsheizspulen am Kochfeld 111 eine externe Induktionsspule 140 vorgesehen, die mittels eines Anschlusskabels 134 mit dem Kochfeldgehäuse 130 verbunden ist. Dabei ist sie an Anschlüssen 132 mit zwei Leitern der Anschlussleitung 136 verbunden, welche dickeren Querschnitt aufweisen und die Leistung von einem Umrichter bzw. Leistungsteil an die externe Induktionsspule 140 übertragen. Des Weiteren ist hier ein separates Signalkabel 135 vorgesehen, das von der externen Induktionsspule 140 an einen Anschlussstecker 132' geht und dort angesteckt ist. Dieser Anschlussstecker 132' ist nahe der Anschlüsse 132 vorgesehen.

Die externe Induktionsspule 140 ist hier ähnlich wie zur Fig. 6 beschrieben sozusagen eine fünfte Spule des Induktionskochfelds 120. Eine der anderen vier Induktionsheizspulen kann mit der externen Induktionsspule 140 im Wechsel angesteuert werden, wie dies zuvor beschrieben worden ist, vorteilhaft mittels eines Relaisschalters. Diese vier Induktionsheizspulen sind elektrisch angeschlossen wie es in der Fig. 6 dargestellt ist, also mittels Anschlusskabeln und von oben durch Anschlussöffnungen in einem Tragblech. Da dies nach einem Einbau des Induktionskochfelds 120 in ein genanntes System bzw. an eine Unterseite 115 einer Arbeitsplatte nicht mehr gut möglich ist, kann auch eine gemäß der Fig. 7 erkennbare Anschlussmöglichkeit geschaffen werden. Hier kann die externe Induktionsspule 140 auch nachträglich eingebaut und angeschlossen werden. Die Anschlüsse 132 sind offensichtlich auch leicht von der Unterseite, also im eingebauten Zustand, zu erreichen. Sie können nach dem Anschließen noch mittels eines Deckels odgl. abgedeckt werden. In diesem Bereich können auch weitere Anschlüsse zum allgemeinen elektrischen Anschluss des Induktionskochfelds 120 an eine Energieversorgung auf übliche Weise vorgesehen sein, beispielsweise mittels eines zuvor beschriebenen Versorgungsanschlusses, also eines Kabels, das in einem Haus fest installiert sein kann und an die Anschlüsse heranreichen kann.

In der Fig. 8 ist eine nochmals weitere Abwandlung eines Systems 211 bestehend aus Induktionskochfeld 220 und Arbeitsplatte 213 dargestellt. Von einem Kochfeldgehäuse 230b, welches ein Zweier-Modul zum Kochen enthalten kann, gehen drei kurze Kabelstücke 238a bis 238c ab. Jedes der Kabelstücke 238a bis 238c weist an einem Ende einen Stecker 239a bis 239c auf. Eine externe Induktionsspule 240 ist in einer Ausnehmung 218 der Arbeitsplatte 213 angeordnet. Eine Anschlussleitung 236 geht davon ab und ist mit einer an ihrem Ende befestigten Buchse auf den Stecker 239a aufgesteckt, also damit verbunden. Wie zu erkennen ist, könnten auch noch zwei weitere externe Induktionsspulen über die anderen beiden Stecker 239b und 239c mit dem Kochfeldgehäuse 230b des Induktionskochfelds 220 verbunden werden. Somit kann in einer hier direkt dargestellten Variante das Kochfeldgehäuse 230b bis zu drei externe Induktionsspulen versorgen. Dies wäre dann eine externe Induktionsspule mehr als überhaupt maximal für das Zweier-Modul im Kochfeldgehäuse 230b vorgesehen. Somit ist eigentlich klar, da dieses Zweier-Modul eben nur zwei Induktionsspulen überhaupt unterschiedlich und jeweils eigenständig ansteuern kann, dass wieder wie zuvor beschrieben mittels eines Relaisschalters odgl. zwischen verschiedenen externen Induktionsspulen 240 und möglicherweise auch zwischen mindestens einer Induktionsheizspule am Kochfeldgehäuse 230b selbst geschaltet werden muss.

In einer leicht vorstellbaren Variante kann vorgesehen sein, dass eines der Kabelstücke 238 intern weitergeführt ist und mit dem größeren Kochfeldgehäuse 230a und einem der darin angeordneten Umrichter bzw. Leistungsteiler verbunden ist. Es kann wiederum entweder anstelle einer dort möglichen Induktionsheizspule angeschlossen sein, alternativ mittels eines genannten Relaisschalters im Wechsel zu einer solchen angesteuert werden.

In der Fig. 9 ist eine Ausgestaltung entsprechend der vorgenannten Alternative dargestellt bzw. lässt sich erahnen. Das Induktionskochfeld 320 weist ein großes Kochfeldgehäuse 340a und ein kleines Kochfeldgehäuse 340b auf, jeweils ausgebildet mit zwei Zweier-Modulen und einem Zweier-Modul. Das rechte große Kochfeldgehäuse 340a ist mittels einer Anschlussleitung 336 mit einer ersten externen Induktionsspule 340a verbunden, die auf zuvor beschriebene Art und Weise daneben an einer Unterseite 315 einer Arbeitsplatte 313 des Systems 311 angeordnet ist. Das linke kleine Kochfeldgehäuse 340b ist mit einer Anschlussleitung 336b mit einer externen Induktionsspule 340b verbunden. Auch diese ist in einer Ausnehmung 318b an der Unterseite der Arbeitsplatte angeordnet.

Die Anschlussleitungen 336a und 336b sind, wie beispielsweise zu den Fig. 5 und 6 erläutert, fest mit dem Induktionskochfeld 320 verdrahtet bzw. daran angeschlossen. Sie können entweder dort möglicherweise vorsehbare Induktionsheizspulen ersetzen oder aber zusätzlich zu diesen vorgesehen sein. Mittels eines Relaisschalters kann dann eine der beiden für einen Betrieb angesteuert werden.

In der Fig. 10 ist an einer geschnittenen externen Induktionsspule 40 im Detail dargestellt, wie diese aufgebaut sein kann. Die Induktionsspule 40 weist einen Windungskörper 44 auf, der einlagig spiralig aus Spulenlitze gewickelt ist. Er kann beispielsweise zwischen Mikanitscheiben angeordnet sein und in einem Spulengehäuse 46 aus Kunststoff angeordnet sein. Dabei ist er vorteilhaft relativ nahe zu einer Oberseite 47 des Spulengehäuses 46 angeordnet. Hier kann auch ein vorgenannter Temperatursensor 42 vorgesehen sein.

Das Spulengehäuse 46 weist vier seitlich abstehende Befestigungsabschnitte 48 auf, mit denen es an die Unterseite 15 der Arbeitsplatte 13 angeschraubt werden kann. Dabei sollte die Oberseite 47 des Spulengehäuses 46 nach Möglichkeit am Boden der Ausnehmung 18 anliegen oder sehr nahe sein. Diese Ausnehmung 18 muss so in der Arbeitsplatte 13 eingebracht sein, dass dann die Induktionsspule 40 bzw. der Windungskörper 44 einen genau definierten Abstand zu der Oberseite 14 der Arbeitsplatte 13 hat. Dies ist für die Verwendung zur induktiven Leistungsübertragung von großer Bedeutung.

Es ist auch dargestellt, wie von der Seite her die Anschlussleitung 36 an das Spulengehäuse 46 herangeführt ist und dort durch eine Öffnung an den Windungskörper 44 geht. Vorteilhaft kann diese Anschlussleitung 36 eine weitergeführte Spulenlitze des Windungskörpers 44 sein.

## Patentansprüche

1. Induktionskochfeld mit:
- mindestens einer Induktionsheizspule zum induktiven Beheizen eines darüber angeordneten Kochgeschirrs,
- mindestens einer externen Induktionsspule zur induktiven Leistungsübertragung zu einem elektrischen Verbraucher,
- mindestens einem Leistungsteil samt Umrichter zur Leistungsversorgung der mindestens einen Induktionsheizspule und der mindestens einen externen Induktionsspule,
- einer Kochfeldsteuerung,
- einer Kochfeldplatte,
- einer Bedieneinrichtung,
- einem Versorgungsanschluss zur Energieversorgung des Induktionskochfelds von außen,
- einem Kochfeldgehäuse, in dem das Leistungsteil angeordnet ist, wobei der Versorgungsanschluss an oder in dem Kochfeldgehäuse angeordnet ist,
**dadurch gekennzeichnet, dass**:
- die mindestens eine Induktionsheizspule innerhalb des Kochfeldgehäuses bzw. des Induktionskochfelds und unterhalb der Kochfeldplatte angeordnet ist,
- an dem Leistungsteil eine Anschlussleitung angeschlossen ist,
- an der Anschlussleitung die externe Induktionsspule angeschlossen ist zur Leistungsversorgung durch das Leistungsteil und den Umrichter darin,
- die externen Induktionsspule zur von dem Induktionskochfeld räumlich getrennten Montage außerhalb des Kochfeldgehäuses bzw. des Induktionskochfelds ausgebildet ist und ausgebildet ist für eine induktive Leistungsübertragung an einen elektrischen Verbraucher, der eine Empfängerspule aufweist, die induktiv mit der externen Induktionsspule koppelbar ist.

2. Induktionskochfeld nach Anspruch 1, **dadurch gekennzeichnet, dass** an dem Leistungsteil neben Anschlüssen für die mindestens eine Induktionsheizspule ein weiterer Zusatz-Anschluss vorgesehen ist, wobei der Zusatz-Anschluss zur elektrischen Verbindung mit der Anschlussleitung ausgebildet ist und die damit verbundene Anschlussleitung aus dem Kochfeldgehäuse herausgeführt ist, wobei an dem Zusatz-Anschluss eine von dem Leistungsteil bzw. dem Umrichter umgerichtete Spannung anliegt, wobei insbesondere die Anschlussleitung lösbar mit dem Zusatz-Anschluss verbunden ist oder unlösbar mit dem Zusatz-Anschluss verbunden ist.

3. Induktionskochfeld nach Anspruch 1, **dadurch gekennzeichnet, dass** an dem Leistungsteil so viele Anschlüsse vorgesehen sind wie Induktionsheizspulen in dem Induktionskochfeld angeordnet sind oder angeordnet sein können, wobei eine dieser Induktionsheizspulen entfernt ist und an deren Anschluss die Anschlussleitung für die externe Induktionsspule zur induktiven Leistungsübertragung angeschlossen ist, wobei vorzugsweise die Anschlüsse als Steckverbindung oder als Schraubverbindung ausgebildet sind.

4. Induktionskochfeld nach einem der vorhergehenden Ansprüche, **dadurch gekennzeichnet, dass** die Kochfeldsteuerung dazu ausgebildet ist, mittels der Leistungsversorgung die externe Induktionsspule zur induktiven Leistungsübertragung an den elektrischen Verbraucher anzusteuern derart, dass eine Leistungsanforderung von dem elektrischen Verbraucher über die induktive Kopplung zwischen Empfängerspule und externer Induktionsspule an das Leistungsteil und an die Kochfeldsteuerung übertragbar ist und dort umgesetzt wird zur gewünschten induktiven Leistungsübertragung mittels der externen Induktionsspule an den elektrischen Verbraucher.

5. Induktionskochfeld nach einem der vorhergehenden Ansprüche, **dadurch gekennzeichnet, dass** die externe Induktionsspule zur induktiven Leistungsübertragung an den elektrischen Verbraucher in einem von dem Kochfeldgehäuse separaten Spulengehäuse angeordnet ist, wobei vorzugsweise in dem Spulengehäuse unterhalb der Induktionsspule Ferritkörper angeordnet sind, wobei insbesondere das separate Spulengehäuse frei von jeglicher Bedieneinrichtung ist.

6. Induktionskochfeld nach Anspruch 5, **dadurch gekennzeichnet, dass** das separate Spulengehäuse eine daran oder darin vorgesehene elektrische Anschlusseinrichtung für die Anschlussleitung aufweist, wobei die externe Induktionsspule zur induktiven Leistungsübertragung mit einer Spulenlitze mit der elektrischen Anschlusseinrichtung verbunden ist, vorzugsweise fest verbunden ist, und wobei die Anschlussleitung lösbar mit der elektrischen Anschlusseinrichtung verbindbar ist, insbesondere als Steckverbindung oder als Schraubverbindung.

7. Induktionskochfeld nach Anspruch 6, **dadurch gekennzeichnet, dass** von dem Spulengehäuse eine fest und unlösbar mit der externen Induktionsspule verbundene Anschlussleitung wegführt, wobei vorzugsweise die Anschlussleitung eine verlängerte Spulenlitze der externen Induktionsspule ist oder aufweist, wobei die Anschlussleitung an einem freien Ende ausgebildet ist zum Herstellen einer elektrischen Verbindung, insbesondere als Steckverbindung oder als Schraubverbindung.

8. Induktionskochfeld nach einem der vorhergehenden Ansprüche, **dadurch gekennzeichnet, dass** die externe Induktionsspule eine Erkennungsfunktion aufweist oder eine Sensoreinrichtung daran angeordnet ist, die permanent aktiviert sind um das Aufsetzen des elektrischen Verbrauchers zu dessen induktiver Leistungsversorgung zu erkennen, wobei vorzugsweise in dem Spulengehäuse für die externe Induktionsspule nach Anspruch 6 oder 7 ein Mikrocontroller angeordnet ist zur Auswertung von Sensoren an der externen Induktionsspule, um das Aufsetzen des elektrischen Verbrauchers zu erkennen.

9. Induktionskochfeld nach einem der vorhergehenden Ansprüche, **dadurch gekennzeichnet, dass** in dem Leistungsteil mindestens eine Schalteinrichtung, vorzugsweise ein Relais oder Leistungshalbleiterschalter, vorgesehen ist, um umgerichtete Spannung des Umrichters entweder mit einer angeschlossenen Induktionsheizspule im Kochfeldgehäuse oder mit der angeschlossenen externen Induktionsspule zu verbinden, die außerhalb angeordnet ist.

10. Induktionskochfeld nach einem der vorhergehenden Ansprüche, **dadurch gekennzeichnet, dass** zwei Anschlussleitungen aus dem Kochfeldgehäuse herausgeführt sind zum Anschluss von zwei externen Induktionsspulen für eine induktive Leistungsübertragung.

11. Induktionskochfeld nach einem der vorhergehenden Ansprüche, **dadurch gekennzeichnet, dass** die mindestens eine externe Induktionsspule auch zum induktiven Beheizen von darüber angeordneten Kochgefäßen ausgebildet ist und dazu entsprechend ansteuerbar ist und/oder dass mindestens einer der Induktionsheizspulen ausgebildet ist für eine induktive Leistungsübertragung an den elektrischen Verbraucher.

12. Induktionskochfeld nach einem der vorhergehenden Ansprüche, **dadurch gekennzeichnet, dass** es zwei Kochfeldgehäuse aufweist, vorzugsweise mit einer einzigen gemeinsamen Kochfeldplatte, von denen jedes ein Leistungsteil samt Umrichter aufweist, wobei insbesondere in einem Kochfeldgehäuse nur Induktionsheizspulen angeordnet sind ohne Anschlussmöglichkeit für die externe Induktionsspule und in dem anderen Kochfeldgehäuse ein Zusatz-Anschluss nach Anspruch 2 vorgesehen ist für die externe Induktionsspule.

13. System aufweisend ein Induktionskochfeld nach einem der vorhergehenden Ansprüche und eine Arbeitsplatte, wobei das Induktionskochfeld an der Arbeitsplatte angeordnet ist, insbesondere in einen Ausschnitt eingesetzt ist, wobei unter dieser Arbeitsplatte oder unter einer weiteren Arbeitsplatte des Systems die externe Induktionsspule angeordnet ist und mittels der Anschlussleitung mit dem Induktionskochfeld verbunden ist.

14. System nach Anspruch 13, **dadurch gekennzeichnet, dass** die Anschlussleitung die einzige elektrische und/oder signalübertragende Verbindung der externen Induktionsspule nach außen und/oder an das Induktionskochfeld ist, wobei vorzugsweise die externe Induktionsspule keine integrierte Leistungsumwandlung aufweist.

15. System nach Anspruch 13 oder 14, **dadurch gekennzeichnet, dass** die externe Induktionsspule in dem Spulengehäuse nach Anspruch 6 oder 7 angeordnet ist, wobei das Spulengehäuse von unten an der Arbeitsplatte befestigt ist, insbesondere lösbar befestigt ist, wobei vorzugsweise die Arbeitsplatte oberhalb des Spulengehäuses in einem Ausnehmungsbereich eine geringere Dicke aufweist als in den übrigen Bereichen und insbesondere mechanisch dünner gemacht ist mittels eines Sacklochs oder dergleichen und das Spulengehäuse in diesen Ausnehmungsbereich hineinreicht.

16. System nach einem der Ansprüche 13 bis 15, **dadurch gekennzeichnet, dass** die Arbeitsplatte in dem Bereich, in dem die externe Induktionsspule angeordnet ist, eine Dicke von maximal 12 mm aufweist, vorzugsweise zwischen 1 mm und 8 mm, wobei sie insbesondere aus Material besteht, das für Magnetfelder durchlässig ist.

17. System nach einem der Ansprüche 13 bis 16, **dadurch gekennzeichnet, dass** die Anschlussleitung vom Leistungsteil an eine außerhalb des Kochfeldgehäuses angeordnete Anschlussbox geführt ist und mit dieser elektrisch verbunden ist, insbesondere an Schraubklemmen oder einer Steckverbindung elektrisch verbunden ist, wobei an der Anschlussbox mindestens eine externe Induktionsspule zur induktiven Leistungsübertragung angeschlossen ist, wobei vorzugsweise die Anschlussbox an einem Tragblech des Induktionskochfelds oder an der Arbeitsplatte befestigt ist.

18. System nach einem der Ansprüche 13 bis 17, **dadurch gekennzeichnet, dass** in der Arbeitsplatte ein Kanal für die Anschlussleitung vorgesehen ist, insbesondere hineingefräst ist, wobei die Anschlussleitung innerhalb des Kanals verläuft und in eingebautem Zustand nicht aus dem Kanal bzw. der Arbeitsplatte hervorsteht, wobei vorzugsweise die Anschlussleitung in dem Kanal befestigt ist, insbesondere mittels Kleben, Klemmen, oder sonstiger Sicherungen.
